Europäisches Patentamt

(19) European Patent Office    (11) Publication number: **0 139 338**

Office européen des brevets    **A2**

(12) **EUROPEAN PATENT APPLICATION**

(21) Application number: **84201520.8**    (51) Int. Cl.⁴: **A 01 F 25/20**
                                                **B 26 D 7/26**
(22) Date of filing: **31.03.82**

(30) Priority: **01.04.81 NL 8101629**

(43) Date of publication of application:
**02.05.85 Bulletin 85/18**

(84) Designated Contracting States:
**BE DE FR GB NL**

(60) Publication number of the earlier application
in accordance with Art. 76 EPC: **0 062 384**

(71) Applicant: **Multinorm B.V.**
**Hoofdweg 1278 P.O. Box 1**
**NL-2150 AA Nieuw-Vennep(NL)**

(72) Inventor: **Vissers, Hermanus Hendrik**
**711 Venneperweg**
**NL-2152 MA Nieuw-Vennep(NL)**

(72) Inventor: **Weststrate, Marinus**
**11, Heereweg**
**NL-2161 AB Lisse(NL)**

(72) Inventor: **Prins, Nicolaas**
**65 Sotaweg**
**NL-2371 GB Roelofarendsveen(NL)**

(74) Representative: **Hoorweg, Petrus Nicolaas et al,**
**OCTROOIBUREAU ARNOLD & SIEDSMA Sweelinckplein**
**1**
**NL-2517 GK The Hague(NL)**

(54) **Ensilage cutting device.**

㊗ An ensilage cutting device mainly comprising a frame (1)
for supporting a substantially horizontal carrying element
(2), for example, a fork and a guide (3) arranged at a distance
above said carrying element for a carriage (4) adapted to
move along the same and having an upwardly and down-
wardly movable cutting member (5) and provided with a
pressing member acting on the ensilage said pressing
member being movable along a substantially rectilinear path
by means of a pivotable rod system (19, 20 and 27, 28
respectively) such that both the rod system and the pressing
member (15 and 26, 31, 36 respectively) occupy minimum
space and the mechanism can easily be accommodated within
the bounds of the device formed by the cutting face of the
cutting member and the frame.

./...

Croydon Printing Company Ltd

FIG. 2

FIG. 5

Ensilage cutting device

------------------------------------------------------------

The invention relates to an ensilage cutting device mainly comprising a frame for supporting a substantially horizontal carrying element, for example, a fork and a guide arranged at a distance above said carrying element for a carriage adapted to move along the same and having an upwardly and downwardly movable cutting member and provided with a pressing member acting on the ensilage.

The object of the invention is to have the pressing member arranged so as to be movable along a substantially rectilinear path by means of a pivotable rod system. This has the advantage that both the rod system and the pressing member occupy minimum space so that the mechanism can easily by accomodated within the bounds of the device formed by the cutting face of the cutting member and the frame.

The rod system is preferably formed by two rods pivoted to a carrying part of the device, to the free ends of which is pivoted a coupling rod connected with the pressing member.

The pressing member may be formed by means to push the cut packet of ensilage away from the carrying element and in this case the rod system is pivotally connected near the carrying element with the frame, the pressing member then being movable along a substantially rectilinear path over the carrying element.

When the pressing element is provided on the underside with supports extending across the carrying element the ensilage can be slipped in a simple manner from the carrying element by depositing the device on said supports and by moving forwards the carriage or tractor carrying the device.

When the pressing member is used as a stamp acting on top of the packet of ensilage to be cut out in order to optimalize the cutting effect of the cutting member in the ensilage, it is preferred to pivot the rod system to the guide of the carriage for the cutting member, the pressing member then being formed by a ram acting on top of the ensilage.

By this construction the height of the device is limited so that the manoeuvrability of the device is enhanced.

The invention will be described more fully hereinafter with reference to the figures.

The drawing shows in:

Fig. 1 a side elevation of an embodiment of the ensilage cutter comprising as a cutting member a saw blade which is vertically movable up and down,

Fig. 2 a perspective view of a detail of the device provided with a pressing member,

Fig. 3 a side elevation of the device of fig. 2,

Fig. 4 a side elevation of a detail of the guide with a ram suspended thereto,

Fig. 5, 6, 7 perspective views of the top side of the device provided with a guide to which are suspended variants of a ram structure.

The device shown in the figures mainly comprises a framework 1 provided on the underside with a carrying element 2 formed, for example, by a fork and on the top side with a guide 3, along which is guided a carriage 4 having a cutting member 5 adapted to move up and down in the direction of the arrow P1.

The framework 1 is movable up and down by means of a cylinder 6 along a frame 8 that can be coupled with an agricultural tractor 7.

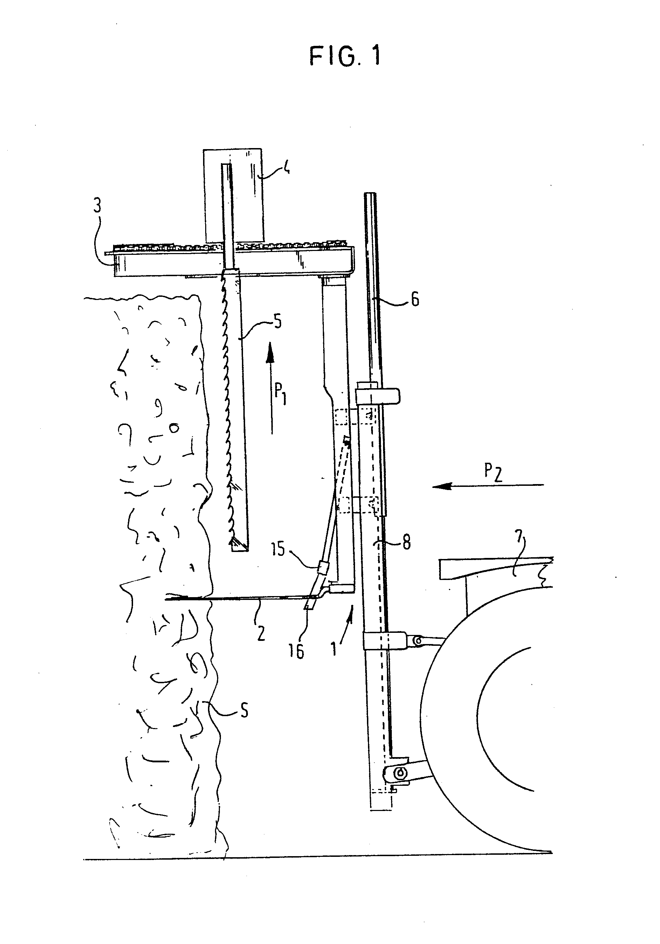

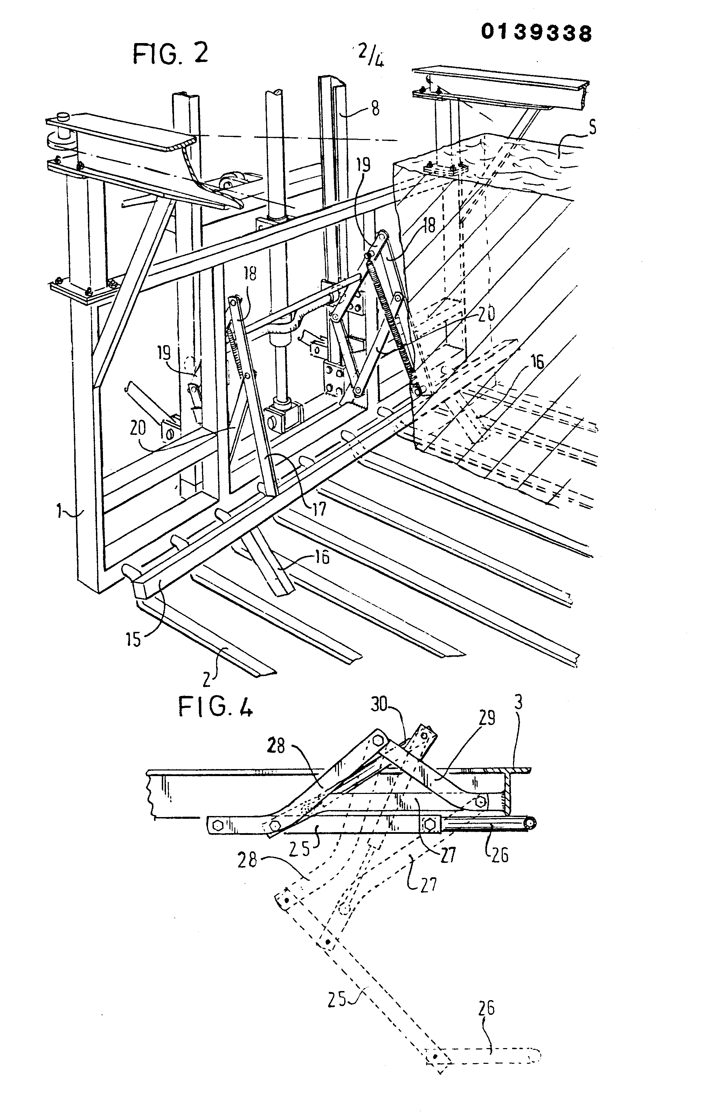

Fig. 2 is a perspective view of the lower part of the device of fig. 1; the corresponding parts are designated by the same reference numerals.

Near the lower side of the framework 1 a pressing member 15 is arranged above the carrying element 2, said

member 15 being provided on the underside with supports 16 extending across the carrying element (see also fig. 1). The pressing member 15 is fastened to the end of two coupling rods 17, 18 each of which is pivotally connected with two pivotal rods 19 and 20 respectively. The pivotal rods 19, 20 are each pivoted to the framework 1 in a manner such that a pivotal quadrangle is formed.

Between the coupling rod 18 and one of the pivotal rods 19, 20 is arranged a tensile spring 21.

The pressing member 15 can be used as follows. By lowering the framework 1 along the guide 8 the supports 16 will touch the ground. While driving the tractor forwards, the supports 16 will remain on the ground, whilst the device is drawn on. Therefore, the pressing member 15 will perform a movement with respect to the carrying element 2 and will slip an ensilage slice S received on the carrying element 2 off said carrying element 2. The positions of the pivotal joints 17, 18, 19 and 20 are selected so that the rod-shaped pressing member 15 moves along a path substantially parallel to the top face of the carrying element 2, as a result of which the supports 16 continue extending across the tines of the carrying element 2 throughout the length of movement of the pressing member 15. Thus the slice can be effectively slipped out of the device.

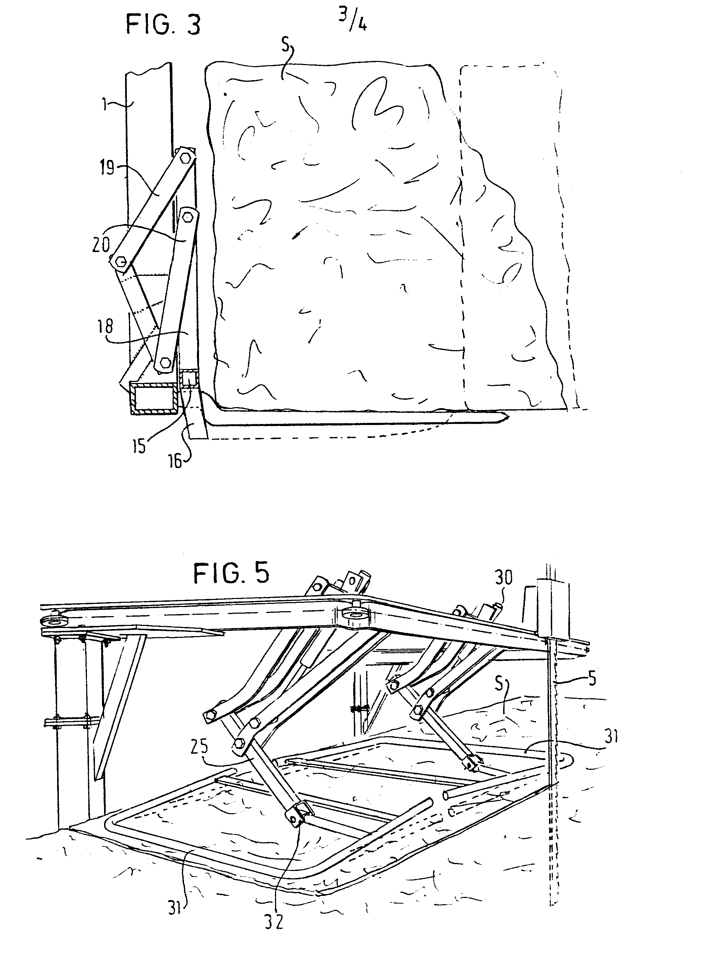

From fig. 3 it will be apparent that the pivotal rod system has the advantage that on the tractor side of the device the mechanism is hardly protruding.

Fig. 4 shows a similar rod system, but intended for a ram operating on the top side of an ensilage slice. The rod system comprises a coupling rod 25, the end of which is provided with the pushing ram 26. The coupling rod is connected with two pivotal rods 27 and 28, which is rotatably fastened to a support 29. The support 29 is held in place on the inner side of the guide rail 3 of the device.

A hydraulic ram 30, operating between the support 29 and the ram 27, ensures an upward-downward movement of the pressing ram 26 in a manner such that this movement is substantially rectilinear.

Figs. 5, 6 and 7 are perspective views of different embodiments of the rams to be used.

Figs. 5, 6 and 7 show a ram in the form of a curved tubing 32, which is omnidirectionally pivoted at 32 to the coupling rod 25 of the rod system. The shape of the ram 31 substantially matches the cut of the cutting member 5 in the silo S. In the embodiment of fig. 5 each ram has its own rod system and its own hydraulic ram 30.

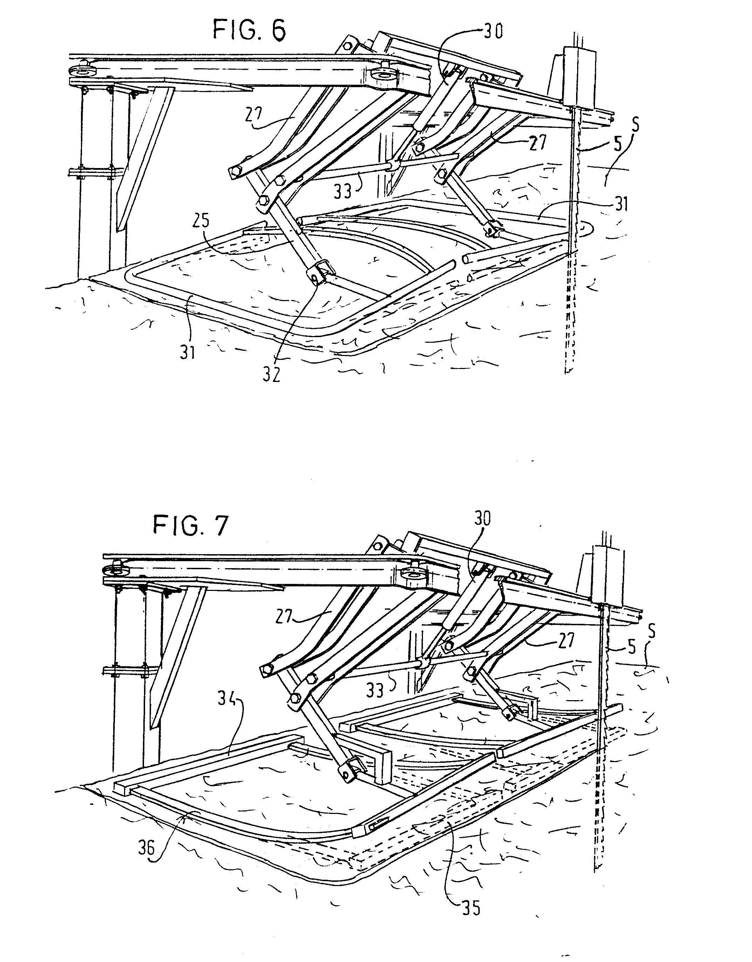

Fig. 6 shows an embodiment in which the pivotal rods 27 of two systems have arranged between them a more or less resilient coupling rod 33, which is engaged by a common hydraulic ram 30. In this embodiment the two rams 31 simultaneously move upwards or downwards.

If necessary, an omnidirectionally pivotable joint may be arranged between the rod 33 and the hydraulic ram 30 and the pivotal rods 27 respectively instead of using a resilient rod 33.

Fig. 7 shows an embodiment in which the rod system having a common hydraulic ram corresponds with that of fig. 6, though the pushing ram is constructed in the form of two parallel rods 34, 35 between which a leaf spring 36 is arranged. Such a leaf spring enhances the pushing effect of the ram on the top side of the ensilage.

The invention is not limited to the embodiments depicted above.

-----

WHAT IS CLAIMED IS:

1. An ensilage cutting device mainly comprising a frame for supporting a substantially horizontal carrying element, for example, a fork and a guide arranged at a distance above said carrying element for a carriage adapted to move along the same and having an upwardly and downwardly movable cutting member and provided with a pressing member acting on the ensilage characterized in that the pressing memver is arranged by means of a pivotal rod system so as to be movable along a substantially rectilinear path.

2. A device as claimed in claim 1 characterized in that the rod system is formed by two rods pivoted to a carrying part of the device and having pivoted to their free ends a coupling rod connected with the pressing member.

3. A device as claimed in claim 1 and 2 characterized in that the rod system is pivotally connected near a carrying element with the frame and the pressing member is movable over said carrying element along a substantially rectilinear path.

4. A device as claimed in claim 3 characterized in that the carrying element is provided on the underside with supports extending across the carrying element.

5. A device as claimed in anyone of the preceding claims 1 and 2 characterized in that the rod system is pivotally connected with the guide of the carriage and the pressing member is constructed in the form of at least one ram acting on the top of the ensilage.

6. A device as claimed in claim 5 characterized in that each ram has a U-shaped form and is omnidirectionally pivoted to the coupling rod.

7. A device as claimed in claims 5 and 6 characterized in that one or more parts of the ram is (are) formed by (a) leaf spring(s).

-----

FIG. 1

0139338

FIG. 2

FIG. 4

FIG. 3

FIG. 5

FIG. 6

FIG. 7

6-413.